# EUROPÄISCHE PATENTSCHRIFT

(11) **EP 0 611 632 B1**
(45) Veröffentlichungstag und Bekanntmachung des Hinweises auf die Patenterteilung: **20.03.1996**
(21) Anmeldenummer: 93120237.8
(22) Anmeldetag: 16.12.1993
(51) Int. Cl.: B25F 5/02, B25G 1/06, B23D 51/00, A01G 3/04

(54) **Beidhändig geführtes Elektrohandwerkzeug mit Griffbügel**
Two-handed guided electrical hand tool with grab handle
Outil électrique portable quidé à deux mains avec une poignée à étrier

(30) Priorität: 30.01.1993 DE 4302676
(43) Veröffentlichungstag der Anmeldung: 24.08.1994
(73) Patentinhaber: ROBERT BOSCH GMBH, D-70442 Stuttgart (DE)
(72) Erfinder: Stäbler, Manfred-Otto, D-71111 Waldenbuch (DE); Neubert, Werner, Dipl.-Ing., D-70619 Stuttgart (DE); Dohr, Manfred, D-73734 Esslingen (DE); Warkentin, Heinz, D-71573 Allmersbach Im Tal (DE); Schadow, Joachim, Dipl.-Ing., D-70565 Stuttgart (DE); Müller, Joachim, D-70597 Stuttgart (DE)

(56) Entgegenhaltungen:
- EP-A- 0 267 472
- DE-A- 1 939 839
- DE-A- 3 114 906
- DE-A- 3 638 394
- DE-A- 3 921 752
- US-A- 3 155 128
- US-A- 5 031 395

## Beschreibung

### Stand der Technik

Die Erfindung geht aus von einem beidhändig geführten Elektrohandwerkzeug wie Schwert-, Kettensägen, Heckenscheren und dergleichen nach dem Oberbegriff des Patentanspruchs 1.

Ein gattungsgemäßes Elektrohandwerkzeug ist z.B. aus der DE-A-3921752 bereits bekannt.

Bei solchen Handwerkzeugen ist es bekannt, am vorderen Bereich des Werkzeuggehäuses einen Zusatzgriff anzubringen, der als Griffbügel ausgebildet ist und beispielsweise in zwei vorgegebenen Stellungen verschwenkbar zu befestigen ist. Da der Griffbügel bei den bekannten Werkzeugen entweder zu beiden Seiten gleichmäßig oder auf einer vorgegebenen Seite seitlich über das Gehäuse des Werkzeugs vorsteht, können seitenwandnahe Schnitte wegen des dann im Wege stehenden Griffbügels nicht ausgeführt werden.

### Vorteile der Erfindung

Die erfindungsgemäße Lösung mit den kennzeichnenden Merkmalen des Patentanspruchs 1 hat demgegenüber den Vorteil, daß der Griffbügel am Werkzeug nicht nur in verschiedenen Griffstellungen schwenkbar ist, sondern darüberhinaus zur Durchführung wandnaher Schnitte jeweils dort zum Gehäuse des Werkzeugs hin auf seiner Schwenkachse längs verschiebbar am Werkzeug befestigt ist. Damit wird sowohl die Handhabung des Werkzeugs als auch seine Verwendbarkeit verbessert.

Durch die in den abhängigen Patentansprüchen 2-10 aufgeführten Merkmale ergeben sich vorteilhafte Weiterbildungen und Verbesserungen des im Patentanspruch 1 angegebenen Merkmals. Besonders vorteilhaft ist dabei, daß der Griffbügel beidseitig bis zu einem vom Werkzeuggehäuse auf der Befestigungs- bzw. Schwenkachse gebildeten Anschlag verschiebbar ist, wodurch sich das Werkzeug für Linkshänder wie für Rechtshänder gleich gut handhaben läßt.

### Zeichnung

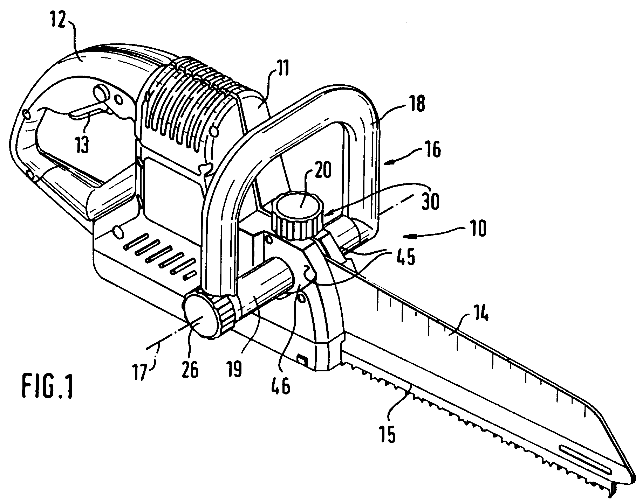

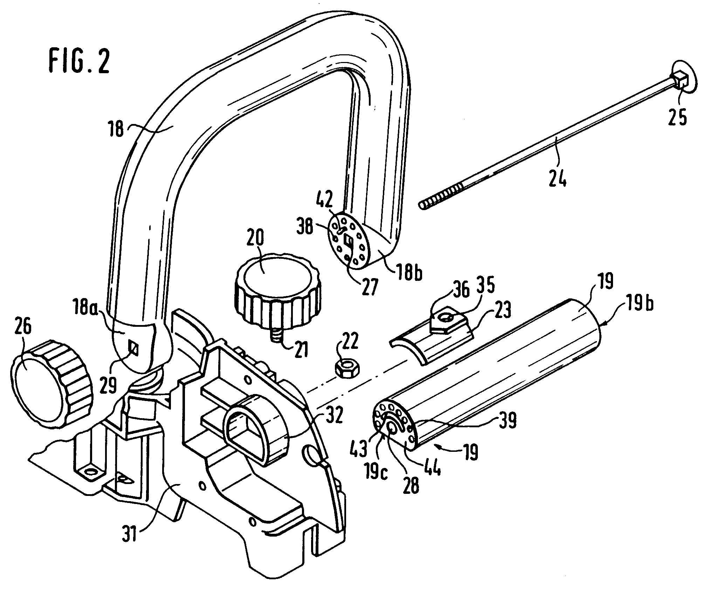

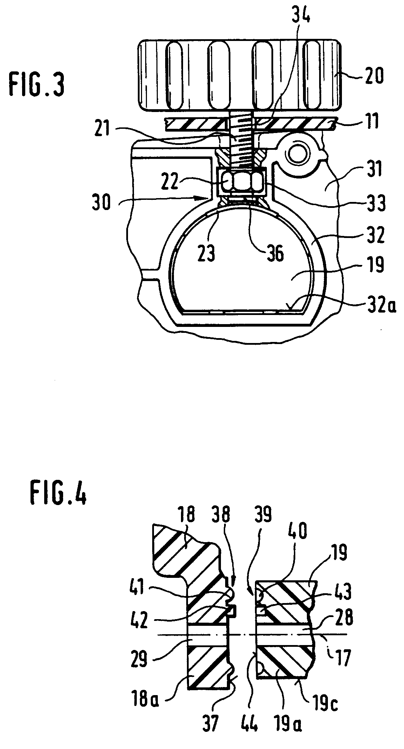

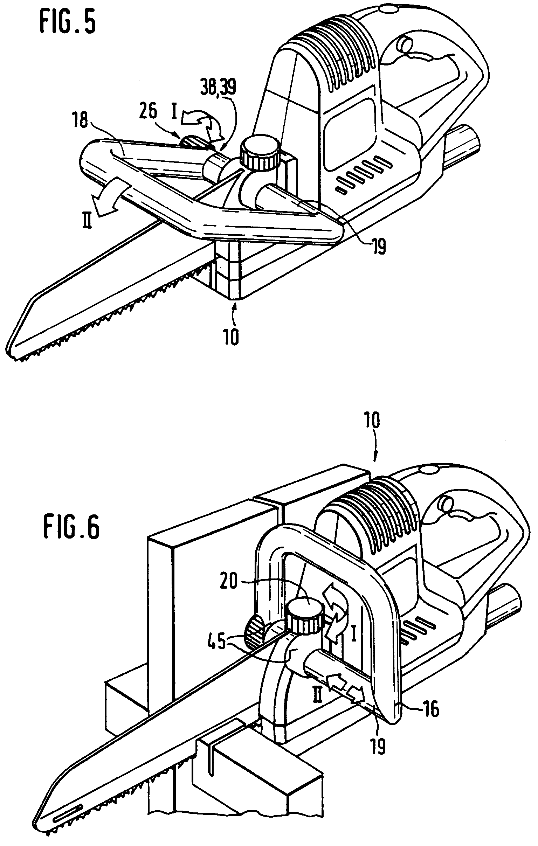

Ein Ausführungsbeispiel der Erfindung ist in der Zeichnung dargestellt und in der nachfolgenden Beschreibung näher erläutert. Es zeigen Figur 1 eine Schwertsäge mit erfindungsgemäß ausgebildetem Zusatzhandgriff in raumbildlicher Darstellung, Figur 2 die Einzelteile des Zusatzhandgriffs vor dem Anbringen an der Schwertsäge nach Figur 1 in raumbildlicher Darstellung, Figur 3 die Klemmvorrichtung zum Feststellen eines seitlich verschiebbaren Distanzrohrs des Zusatzhandgriffs am Werkzeuggehäuse, Figur 4 einen Querschnitt durch eine verschwenkbare Rastverbindung zwischen Griffbügel und Distanzrohr des Zusatzhandgriffs, Figur 5 zeigt die Schrittfolge für ein Verschwenken des Zusatzhandgriffs und Figur 6 die Schrittfolge für ein seitliches Verschieben des Zusatzhandgriffs.

### Beschreibung des Ausführungsbeispiels

In Figur 1 ist eine Schwertsäge als beidhändig geführtes Elektrohandwerzeug raumbildlich dargestellt und mit 10 bezeichnet. Antrieb und Getriebe sind von einem mehrteiligen Isolierstoffgehäuse 11 umgeben, das einen als Handgriff 12 ausgebildeten Bereich hat, in dem ein von Hand zu betätigendes Schaltelement 13 zum Ein- und Ausschalten des Antriebs angeordnet ist. Im vorderen Bereich des Isolierstoffgehäuses 11 befindet sich ein Schwert 14, dessen Unterseite zwei parallel zueinander gegenläufig hin- und herschwingende Sageblätter 15 führt. Außerdem befindet sich im vorderen Bereich des Isolierstoffgehäuses 11 ein Zusatzhandgriff 16, der auf seiner Schwenk- beziehungsweise Befestigungsachse 17 unabhängig voneinander verschwenkbar und längsverschiebbar an der Schwertsage 10 befestigt ist.

Der Zusatzhandgriff besteht aus mehreren, in Figur 2 vor dem Zusammenbau raumbildlich dargestellten Einzelteilen, und zwar aus einem Griffbügel 18, einem Distanzrohr 19, einem Handrad 20 mit Gewindebolzen 21, eine damit zusammenwirkende Gewindemutter 22 und ein Klemmteil 23, eine Flachkopfschraube 24 mit Vierkantansatz 25 und mit einem weiteren, auf das Ende der Flachkopfschraube 24 aufschraubbaren Handrad 26. Das Distanzrohr 19 bildet ein den vorderen Bereich des Isolierstoffgehäuses 11 durchdringendes Teil, welches die Enden 18a, 18b des Griffbügels 18 in der Befestigungsachse 17 miteinander verbindet. Die Griffbügelenden 18a und 18b sind dabei unter Vorspannung des Griffbügels 18 auf die Stirnseiten 19a, 19b des Distanzrohres 19 aufgesetzt. Auf der Befestigungs.- bzw. Schwenkachse 17 ist das eine Ende 18b des Griffbügels 18 mit einer Vierkantbohrung zur Aufnahme des Vierkantansatzes 25 der Flachkopfschraube 24 versehen, die ferner eine Längsbohrung 28 im Distanzrohr 19 und eine Bohrung 29 im anderen Ende 18a des Griffbügels 18 durchdringt. Auf dem freien Ende der Flachkopfschraube 24 ist an dem entsprechend abgeflachten Griffbügelende 18a das Handrad 26 aufgesetzt, welches den Griffbügel 18 auf dem Distanzrohr 19 lösbar festspannt. Das Distanzrohr 19 ist im unteren Bereich mit einer Abflachung 19c versehen.

Aus Figur 3 ist erkennbar, daß das Handrad 20 mit dem Gewindebolzen 21, der Mutter 22 und dem Klemmteil 23 eine von außen werkzeuglos zu betätigende Klemmvorrichtung 30 bildet, die in einem am aus Spritzguß hergestellten und vom Isolierstoffgehäuse 11 eingefaßten Getriebegehäuse 31 ausgebildeten Kragen 32 aufgenommen ist. Das Distanzrohr 19 ist mit seinem im Gehäuse 11 liegenden Bereich in dem ebenfalls unten bei 32a abgeflachten Führungskragen 32 bei gelöster Klemmvorrichtung 30 längsverschiebbar. Das Klemmteil 23 ist dabei im oberen Umfangsbereich des Führungskragens 32 eingesetzt. Die Mutter 22 ist oberhalb des Klemmteils 23 in eine Führung 33 des Getriebegehäuses 31 eingesetzt. Das Handrad 20 wird mit dem Gewindebolzen 21 durch eine Gehäuseöffnung 34 von außen in die Mutter 22 eingeschraubt, durchdringt sodann eine Bohrung 35 einer am Klemmteil 23 U-förmig hochgebogenen Lasche 36 und drückt anschließend das Klemmteil 23 aus dem Kragen 32 des Getriebegehäuses 31 gegen einen entsprechend großflächigen Umfangsbereich des in diesen Kragen 32 eingeschobenen Distanzrohrs 19.

Das Distanzrohr 19 ist an seinen Stirnseiten bis auf die Längsbohrung 28 geschlossen. In mehreren vorgegebenen Stellungen sind an den beiden Enden des Griffbügels 18 auf einander zugewandten Stirnflächen 37 Rastmittel 38 vorgesehen, die kreisförmig um die Schwenkachse 17 angeordnet sind und die mit entsprechend angeordneten, entgegengesetzt ausgebildeten Rastmitteln 39 an den Stirnseiten 40 des Distanzrohres 19 zusammenwirken.

Aus Figur 4 ist erkennbar, daß an den Stirnseiten 40 des Distanzrohres 19 die Rastmittel 39 durch dort eingeformte halbkugelige Kalotten 40 gebildet sind, die mit entsprechend halbkugelig angeformten Buckeln 41 als Rastmittel 38 an den Enden 18a, 18b des Griffbügels 18 zusammenwirken. Durch den Umfangsabstand dieser Rastmittel 38, 39 werden die verschiedenen möglichen Schwenkpositionen des Griffbügels 18 vorgegeben. Zur Begrenzung des Schwenkbereichs des Griffbügels 18 ist ferner an den Stirnflächen 37 ein Nocken 42 angeformt, der jeweils in eine entsprechend ausgebildet, kreissegmentförmige Nut 42 an den Stirnseiten 44 des Distanzrohres eingreift.

Mit Hilfe der Figuren 5 und 6 soll nun die Verstellung des Zusatzhandgriffs 16 bzw. des Griffbügels 18 näher erläutert werden. Ein Verschwenken des Griffbügels 18 in eine durch die Rastmittel 38, 39 vorgegebene Position wird dadurch vorgenommen, daß zunächst das Handrad 26 entgegen dem Uhrzeigersinn gedreht und damit die Flachkopfschraube 24 gelöst sowie die axiale Verspannung bis auf die vom Griffbügel 18 erzeugte Vorspannung aufgehoben wird. Aufgrund dieser axialen Vorspannung kann nun eine rastbare Schwenkbewegung des Griffbügels 18 erfolgen, bis die Nocken 42 am Griffbügel 18 jeweils am Ende der Nuten 43 am Distanzrohr 19 anstoßen. In jeder der dabei durchlaufenden Raststellungen kann das Handrad 26 nun wieder angezogen und damit der Griffbügel 18 in der dann eingestellten Position mit dem Distanzrohr 19 fest verspannt werden. Die Abflachung 19c an der Unterseite des Distanzrohres 19, die in einer entsprechenden Abflachung 32a am Führungskragen 32 des Getriebegehäuses 31 aufliegt, verhindert dabei ein Verdrehen des Distanzrohres 19 an der Schwertsäge 10.

Ein seitliches Verschieben des Zusatzhandgriffs 16 erfolgt in der Weise, daß zunächst mit dem in die Schwertsäge eingesetzten Handrad 20 das Klemmteil 23 am Distanzrohr 19 gelöst wird. Der Griffbügel 18 läßt sich nun mitsamt dem Distanzrohr 19 beidseitig bis zu einem vom Isolierstoffgehäuse 11 der Schwertsäge 10 gebildeten Anschlag 45 auf der Achse 17 stufenlos längsverschieben, wobei die Anschläge jeweils in einer in Figur 1 erkennbaren Gehäusevertiefung 46 liegen, in die der Griffbügel 18 eintauchen kann. Dadurch werden wandnahe Schnitte mit der Schwertsage 11 möglich, ohne daß dabei die Außenkontur des Zusatzgriffs 16 über die Breite des Werkzeuggehäuses 11 hinausragt.

## Patentansprüche

1. Beidhändig geführtes Elektrohandwerkzeug (10) wie Schwert-, Kettensägen, Heckenscheren und dergleichen, mit einem als Teil des Werkzeuggehäuses (11) ausgebildeten festen Handgriff (12) mit eingesetztem Ein- und Ausschalter (13) und mit einem als Griffbügel (18) ausgebildeten Zusatzhandgriff (16), der am Werkzeuggehäuse beidseitig lösbar befestigt und um seine Befestigungsachse (17) verschwenkbar und in vorgegebenen Stellungen feststellbar ist, dadurch gekennzeichnet daß der Griffbügel (18) zusätzlich auf seiner Befestigungs- bzw. Schwenkachse (17) längsverschiebbar am Werkzeug (10) befestigt ist.

2. Elektrohandwerkzeug nach Anspruch 1, dadurch gekennzeichnet, daß der Griffbügel (18) beidseitig bis zu einem vom Werkzeuggehäuse (11) auf der Schwenkachse (17) gebildeten Anschlag (45) längsverschiebbar ist.

3. Elektrohandwerkzeug nach Anspruch 2, dadurch gekennzeichnet, daß die Enden (18a, 18b) des Griffbügels (18) in der Schwenkachse (17) über ein das Werkzeuggehäuse (11) durchdringendes Teil (19) miteinander verbunden sind, welches durch ein lösbares Befestigungsmittel (20 bis 23) längsverschiebbar befestigt ist.

4. Elektrohandwerkzeug nach Anspruch 3, dadurch gekennzeichnet, daß das Teil (19), welches das Werkzeuggehäuse (11) durchdringt, als beidseitig im wesentlichen geschlossenes Distanzrohr mit einer Abflachung (19c) ausgebildet ist, von dem ein Bereich in einer entsprechend abgeflachten rohrförmigen Öffnung im Werkzeug (10) aufgenommen und darin durch eine von außen lösbare Klemmvorrichtung (30) feststellbar ist.

5. Elektrohandwerkzeug nach Anspruch 4, dadurch gekennzeichnet, daß das Distanzrohr (19) an seinem im Werkzeuggehäuse (11) liegenden Bereich in einem Führungskragen (32) mit entsprechender Abflachung (32a) eines Getriebegehäuses (31) aufgenommen ist, in das ein über einen Umfangsbereich reichendes Klemmteil (23) eingesetzt ist, welches von einem außen am Werkzeuggehäuse (11) eingesetzten Handrad (20) gegen das Distanzrohr (19) gepreßt ist.

6. Elektrohandwerkzeug nach einem der vorherigen Ansprüche, dadurch gekennzeichnet, daß die beiden Enden (18a, 18b) des Griffbügels (18) auf einander zugewandten Stirnflächen (37) mit kreisförmig um die Schwenkachse (17) angeordneten Rastmitteln (38) versehen sind, die mit entsprechend angeordneten, entgegengesetzt ausgebildeten Rastmitteln (39) an den Stirnseiten (44) des Zwischen den Griffbügelenden eingesetzten Distanzrohres (19) zusammenwirken.

7. Elektrohandwerkzeug nach Anspruch 6, dadurch gekennzeichnet, daß in der Schwenkachse (17) des Griffbügels (18) die Griffbügelenden (18a, 18b) und das Distanzrohr (19) von einer Schraube (24) verdrehsicher durchsetzt sind, auf deren freies Ende ein außen an einem entsprechend abgeflachten Griffbügelende (18a) aufgesetztes Handrad (26) aufgeschraubt ist, das den Griffbügel (18) auf dem Distanzrohr (19) lösbar festspannt.

8. Elektrohandwerkzeug nach Anspruch 7, dadurch gekennzeichnet, daß an den Stirnseiten (44) des Distanzrohres (19) eingeformte Halbkugelkalotten (40) mit an den Griffbügelenden (18a, 18b) angeformten Halbkugelbuckeln (41) als Rastmittel (39, 38) zusammenwirken, wobei durch deren Umfangsabstand die verschiedenen Schwenkpositionen des Griffbügels (18) vorgegeben sind.

9. Elektrohandwerkzeug nach Anspruch 6, dadurch gekennzeichnet, daß an den einander zugewandten Stirnflächen (37) der Griffbügelenden (18a, 18b) Nocken (42) angeformt sind, die zur Begrenzung des Verschwenkbereichs jeweils in entsprechend ausgebildete kreissegmentförmige Nuten (43) an den Stirnseiten (44) des Distanzrohres (19) eingreifen.

10. Elektrohandwerkzeug nach Anspruch 6, dadurch gekennzeichnet, daß die Griffbügelenden (18a, 18b) unter Vorspannung des Griffbügels (18) auf die Stirnseiten (44) des Distanzrohres (19) aufgesetzt sind.

## Claims

1. Electric hand tool (10) guided by both hands, such as stone saws, chain saws, hedge clippers and the like, comprising a fixed handle (12) constructed as part of the tool casing (11) and provided with an inserted on-off switch (13), and comprising an additional handle (16) which is in the form of a handle bow (18) and is detachably fastened to the tool casing on both sides and which can be pivoted about its fastening axis (17) and fixed in predetermined positions, characterized in that the handle bow (18) is additionally fastened to the tool (10) for longitudinal displacement on its fastening or pivot axis (17).

2. Electric hand tool according to Claim 1, characterized in that the handle bow (18) is longitudinally displaceable on both sides as far as a stop (45) formed by the tool casing (11) on the pivot axis (17).

3. Electric hand tool according to Claim 2, characterized in that the ends (18a, 18b) of the handle bow (18) are joined to one another in the pivot axis (17) by means of a part (19) which passes through the tool casing (11) and which is fastened by a detachable fastening means (20 to 23) for longitudinal displacement.

4. Electric hand tool according to Claim 3, characterized in that the part (19) which passes through the tool casing (11) is in the form of a spacer tube which is substantially closed on both sides and has a flat (19c) of which a portion is received in a correspondingly flattened tubular opening in the tool (10) and can be fastened therein by a clamp device (30) releasable from the outside.

5. Electric hand tool according to Claim 4, characterized in that in its portion lying in the tool casing (11) the spacer tube (19) is received in a guide collar (32), provided with a corresponding flat (32a), of a gear casing (31) into which is inserted a clamp part (23) which extends over a peripheral region and which is pressed against the spacer tube (19) by a handwheel (20) inserted on the outside of the tool casing (11).

6. Electric hand tool according to one of the preceding claims, characterized in that the two ends (18a, 18b) of the handle bow (18) are provided on mutually facing end faces (37) with catch means (38) arranged in a circle around the pivot axis (17) and cooperating with correspondingly arranged catch means (39) of complementary design on the end faces (44) of the spacer tube (19) inserted between the ends of the handle bow.

7. Electric hand tool according to Claim 6, characterized in that in the pivot axis (17) of the handle bow (18) a screw (24) passes through the ends (18a, 18b) of the handle bow and the spacer tube (19), in such a manner as to be non-rotatable, and has screwed onto its free end a handwheel (26) which is mounted externally on a correspondingly flattened end (18a) of the handle bow and which detachably clamps the handle bow (18) fast on the spacer tube (19).

8. Electric hand tool according to Claim 7, characterized in that hemispherical depressions (40) formed in the end faces (44) of the spacer tube (19) cooperate with hemispherical humps (41), formed on the ends (18a, 18b) of the handle bow, as catch means (39, 38), whose peripheral spacing predetermines the various swivelled positions of the handle bow (18).

9. Electric hand tool according to Claim 6, characterized in that on the mutually facing end faces (37) of the ends (18a, 18b) of the handle bow there are formed bosses (42) which for the purpose of limiting the swivelling range each engage in correspondingly shaped grooves (43) in the form of segments of a circle in the end faces (44) of the spacer tube (19).

10. Electric hand tool according to Claim 6, characterized in that the ends (18a, 18b) of the handle bow are mounted on the end faces (44) of the spacer tube (19) with the handle bow (18) under prestress.

## Revendications

1. Outil électrique portatif (10) guidé avec les deux mains, tel que scie sabre, tronçonneuse, taillehaie ou analogue, ayant une poignée (12) fixe faisant partie du boîtier (11) de l'outil, équipée d'un commutateur marche/arrêt (13) ainsi que d'une poignée auxiliaire (16) réalisée en forme de poignée en étrier (18), fixée de manière amovible des deux côtés au boîtier de l'outil et qui peut pivoter autour de son axe de fixation (17) et se bloquer dans des positions prédéterminées, caractérisé en ce que l'étrier formant poignée (18) est en outre fixé à l'outil (10) sur son axe de fixation et de pivotement (17) de manière à pouvoir coulisser longitudinalement.

2. Outil électrique portatif selon la revendication 1, caractérisé en ce que l'étrier formant poignée (18) peut coulisser longitudinalement vers les deux côtés jusqu'à une butée (45) formée par le boîtier de l'outil (11) sur l'axe de pivotement (17).

3. Outil électrique portatif selon la revendication 2, caractérisé en ce que les extrémités (18a, 18b) de l'étrier formant poignée (18) sont reliées par une pièce (19) traversant le boîtier (11) de l'outil, cette pièce étant bloquée en coulissement longitudinal par un moyen de fixation amovible (20-23).

4. Outil électrique portatif selon la revendication 3, caractérisé en ce que la pièce (19) qui traverse le boîtier (11) de l'outil est un tube d'écartement essentiellement fermé des deux côtés et ayant une partie aplatie (19c), dont une zone est reçue dans une ouverture tubulaire, aplatie de façon correspondante, de l'outil (10), et peut y être bloquée par un dispositif de serrage (30), commandé de l'extérieur.

5. Outil électrique portatif selon la revendication 4, caractérisé en ce que le tube d'écartement (19) est logé, par sa zone située dans le boîtier (11) de l'outil, dans la partie aplatie (32a) d'une collerette de guidage (32) appartenant au boîtier de transmission (31) et dans laquelle est logée une pièce de serrage (23) s'étendant sur une zone périphérique, cette pièce étant pressée contre le tube d'écartement (19) à l'aide d'un bouton (20) appliqué par l'extérieur au boîtier (11) de l'outil.

6. Outil électrique portatif selon l'une des revendications précédentes, caractérisé en ce que les deux extrémités (18a, 18b) de l'étrier formant poignée (18) ont des surfaces frontales (37) tournées l'une vers l'autre, munies de moyens d'accrochage (38) répartis sur un arc de cercle autour de l'axe de pivotement (17), ces moyens coopérant avec des moyens d'accrochage (39) de forme complémentaire disposés de façon correspondante sur les faces frontales (44) du tube d'écartement (19) placées entre les extrémités de l'étrier formant poignée.

7. Outil électrique portatif selon la revendication 6, caractérisé en ce qu'au niveau de l'axe de pivotement (17) de l'étrier formant poignée (18), les extrémités de l'étrier (18a, 18b) et le tube d'écartement (19) sont traversés par une vis (24) bloquée en rotation et dont l'extrémité libre reçoit un bouton (26) appliqué de l'extérieur contre une extrémité d'étrier (18a) aplatie de façon correspondante, l'étrier (18) étant serré de manière amovible sur le tube d'écartement (19).

8. Outil électrique portatif selon la revendication (7), caractérisé en ce que les faces frontales (44) du tube d'écartement (19) comportent des calottes hémisphériques (40) réalisées en creux, pour coopérer avec des bossages hémisphériques (41) formés sur les extrémités (18a; 18b) de l'étrier et constituant des moyens d'encliquetage (39, 38), l'écartement périphérique de ces moyens définissant les différentes positions de pivotement de l'étrier (18) formant poignée.

9. Outil électrique portatif selon la revendication 6, caractérisé par des cames (42) formées sur les faces frontales en regard (37) des extrémités (18a, 18b) de l'étrier, et venant prendre dans des rainures (43) en segment de cercle, de forme correspondante, réalisées dans les faces frontales (44) du tube d'écartement (19 pour limiter la plage de pivotement.

10. Outil électrique portatif selon la revendication 6, caractérisé en ce que les extrémités (18a, 18b) de l'étrier sont rapportées avec précontrainte de l'étrier (18), contre les faces frontales (44) du tube d'écartement (19).
